(19) Europäisches Patentamt

European Patent Office

Office européen des brevets

(11) **EP 1 672 805 A1**

(12) **EUROPEAN PATENT APPLICATION**

(43) Date of publication:
  **21.06.2006 Bulletin 2006/25**

(51) Int Cl.:
  *H04B 1/69* [(2006.01)]   *H04L 25/03* [(2006.01)]
  *H04L 27/00* [(2006.01)]

(21) Application number: **04293042.0**

(22) Date of filing: **17.12.2004**

(84) Designated Contracting States:
  **AT BE BG CH CY CZ DE DK EE ES FI FR GB GR HU IE IS IT LI LT LU MC NL PL PT RO SE SI SK TR**
  Designated Extension States:
  **AL BA HR LV MK YU**

(71) Applicant: **ALCATEL**
  **75008 Paris (FR)**

(72) Inventors:
  • **Jaenecke, Peter**
    **75334 Straubenhardt (DE)**
  • **Pascht, Andreas**
    **73635 Rudersberg (DE)**

(74) Representative: **Schäfer, Wolfgang et al**
    **Dreiss, Fuhlendorf, Steimle & Becker**
    **Postfach 10 37 62**
    **70032 Stuttgart (DE)**

(54) **Method of reducing inter-symbol-interference due to non-orthogonal transmit signal waveforms and transmitter**

(57)  The present invention relates to a method of coding data, wherein a coding signal ($\psi_n(f)$, n=1, .., N) is used for coding data symbols ($d_1$, $d_2$, .., $d_N$), said coding signal ($\psi_n(f)$) comprising an orthogonal component ($\psi_n^0(f)$) and an error component ($\Delta\psi_n(f)$), wherein a transmission signal ($S(f)$) depending on said data symbols ($d_1$, $d_2$, .., $d_N$) and said coding signal ($\psi_n(f)$) is obtained by said coding, wherein the transmission signal ($S(f)$) is preferably obtained according to the equation

$$S(f) = \sum_{n=1}^{N} d_n \psi_n(f),$$

wherein N is the number of data symbols ($d_1$, $d_2$, .., $d_N$) to be coded. Said method is characterized by determining a correction function ($\xi(f)$) and by applying said correction function ($\xi(f)$) to said transmission signal ($S(f)$) in order to obtain a corrected transmission signal ($S_{pd}(f)$).

Fig. 2

**Description**

The present invention relates to a method of coding data, wherein a coding signal is used for coding data symbols, said coding signal comprising an orthogonal component and an error component, wherein a transmission signal depending on said data symbols and said coding signal is obtained by said coding, wherein the transmission signal is preferably obtained according to the equation

$$S(f) = \sum_{n=1}^{N} d_n \psi_n(f) \, ,$$

wherein $\psi_n(f)$ is the coding signal and N is the number of data symbols ($d_1$, $d_2$, .., $d_N$) to be coded.

The present invention also relates to a transmitter comprising means for coding data symbols in order to obtain a transmission signal depending on said data symbols and a coding signal.

Coding methods of the aforementioned kind are applied in contemporary data transmission systems, and orthogonality conditions relating to the coding signal are used for decoding data previously so coded.

More specifically, such coding methods are for instance used within orthogonal code division multiplexing (OCDM) systems and orthogonal frequency division multiplexing (OFDM) systems.

When implementing the above coding methods on computer systems, an undesired error component is introduced to the coding signal due to the finite precision of computer systems leading to a wrong data representation of values of the coding signal. This error component can e.g. be represented by an addend to the solely desired orthogonal component of the coding signal and leads to a violation of the orthogonality conditions, as far as the aggregate coding signal, i.e. the sum of the orthogonal component and the error component is concerned. I.e., the aggregate coding signal does no longer satisfy said orthogonality conditions.

The coding signal may e.g. be represented as

$$\psi_n(f) = \psi_n^0(f) + \Delta\psi_n(f) \, ,$$

wherein $\psi_n^0(f)$ denotes the orthogonal component and $\Delta\psi_n(f)$ denotes the error component of said coding signal.

Using such a prior art coding method and signal within transmission and/or communication systems leads to inter-symbol interference (abbr.: ISI), wherein the absolute value of the ISI corresponds to the degree of violation of the respective orthogonality conditions.

In view of these disadvantages of contemporary coding methods, it is an object of the present invention to provide an improved method of coding data that avoids ISI.

According to the present invention, this object is solved for a coding method of the above mentioned type by determining a correction function and by applying said correction function to said transmission signal in order to obtain a corrected transmission signal.

Thus it is possible to reduce or even eliminate ISI which reduces errors when decoding the inventive corrected transmission signal.

According to an advantageous embodiment of the present invention, said step of applying the correction function is preferably performed by adding and/or subtracting said correction function to/from said transmission signal, which requires only few computational resources and which does not introduce further unnecessary e.g. numerical errors. It is also possible to apply the correction function to the transmission signal by multiplication. However, in this case, an approach of determining the correction function might be more complicated as compared to an approach of adding the correction function to the transmission signal.

A further advantageous embodiment of the present invention is characterized by determining said correction function depending on the coding signal, in particular depending on the error component ($\Delta\psi_n(f)$) of the coding signal ($\psi_n(f)$).

According to another advantageous embodiment of the present invention, said method is characterized in that said correction function is determined depending on an ISI-term corresponding to an inter-symbol interference (ISI) that occurs when coding said data symbols. Preferably, said correction function is determined so as to minimize the ISI-term.

Yet another advantageous embodiment of the present invention is characterized in that said orthogonal component $\psi_n^0(f)$ of said coding signal $\psi_n(f)$ satisfies an orthogonality condition, in particular the orthoquality condition

$$\int\limits_{-\infty}^{+\infty} df\, \psi_n^0(f) H_k(f) = \chi_k\, \delta_{nk}\ ,$$

wherein k,n =1, .., N, wherein $H_k(f)$ is the Hermite polynomial of k-th order, $\chi_k$ is a known constant, and wherein $\delta_{nk}$ is the Kronecker symbol.

The Hermite polynomial may be written as

$$H_k(f) = \left(-1\right)^k e^{f^2} \frac{d^n}{df^n} e^{-f^2}\ .$$

Instead of using Hermite polynomials, according to a further advantageous embodiment of the present invention any other set of orthogonal functions may also be employed to define the coding signal, or its orthogonal component, respectively. In this case, of course, a corresponding orthogonality condition must be used that fits to the respective coding signal.

According to a further advantageous embodiment of the present invention, the ISI-term $\varepsilon_k$ is obtained according to the equation

$$\varepsilon_k\ =\ \int\limits_{-\infty}^{+\infty} df\ H_k(f) \sum_{n=1}^{N} d_n\ \Delta\psi_n(f)\ ,$$

wherein $H_k(f)$ is the Hermite polynomial of k-th order, $\Delta\psi_n(f)$ is said error component, and wherein

$$\xi(f) = \sum_{n=1}^{N} d_n\, \Delta\psi_n(f)$$

constitutes said correction function.

A further solution to the object of the present invention is given by a transmitter according to claim 7.

Further applications, features and advantages of the present invention are described in the following detailed description with reference to the drawings, in which

Fig. 1a    depicts results corresponding to the inventive coding method,

Fig. 1b    depicts further results corresponding to the inventive coding method, and

Fig. 2    gives a graphical representation of the results according to the table of Fig. 1a.

According to a first embodiment of the present invention, a coding signal

$$\psi_n(f) = \psi_n^0(f) + \Delta\psi_n(f)\ , \hspace{3cm} \text{(equation 1)}$$

is used for coding data, wherein $\psi_n^0(f)$ denotes an orthogonal component and $\Delta\psi_n(f)$ denotes an error component of said coding signal $\psi_n(f)$.

The orthogonal component $\psi_n^0(f)$ satisfies the orthogonality condition

$$\int_{-\infty}^{+\infty} df\, \psi_n^0(f) H_k(f) = \chi_k\, \delta_{nk}\ , \qquad\qquad \text{(equation 2)}$$

wherein k,n =1, .., N, wherein $H_k(f)$ is the Hermite polynomial of k-th order, $\chi_k$ is a known constant, and wherein $\delta_{nk}$ is the Kronecker symbol.

The error component $\Delta\psi_n(f)$ symbolizes a deviation of the coding signal $\psi_n(f)$ from an ideal coding signal $\psi_{n,ideal}(f)$, which solely comprises an orthogonal component:

$$\psi_{n,ideal}(f) = \psi_n^0(f)\ .$$

Said error component $\Delta\psi_n(f)$ of the coding signal $\psi_n(f) = \psi_n^0(f) + \Delta\psi_n(f)$ is e.g. due to a data representation of said ideal coding signal $\psi_{n,ideal}(f)$ by means of data types such as used within a computer system or a digital signal processor (DSP), respectively, which offer finite precision.

The data to be coded is provided in form of data symbols $d_1$, $d_2$, .., $d_N$, each of which comprises a data word length of e.g. 18 bit, and a transmission signal S(f) according to

$$S(f) = \sum_{n=1}^{N} d_n \psi_n(f) \qquad\qquad \text{(equation 3)}$$

is obtained by said coding. Said transmission signal $S(f)$ is given in the frequency domain in the present example and depends on said data symbols $d_1$, $d_2$, .., $d_N$ as well as on said coding signal $\psi_n(f)$.

In order to obtain the coded data symbols e.g. within a receiver, the already above described orthogonality condition $\int_{-\infty}^{+\infty} df\, \psi_n^0(f) H_k(f) = \chi_k\, \delta_{nk}$ of equation 2 is used, wherein decoded symbols $T_k$, k=1, .., N, are obtained according to the following equation:

$$T_k = \int_{-\infty}^{+\infty} df\, S(f) H_k(f)\ .$$

In the ideal case, i.e. when using the ideal coding signal

$$\psi_{n,ideal}(f) = \psi_n^0(f)\ ,$$

an ideal transmission signal

$$S_{ideal}(f) = \sum_{n=1}^{N} d_n \, \psi_{n,ideal}(f) \, ,$$

and thus ideally decoded data symbols $T_{k,ideal}$, k=1, .., N, under ideal conditions of infinite precision may be obtained:

$$T_{k,ideal} = \int_{-\infty}^{+\infty} df \, S_{ideal}(f) H_k(f) = \int_{-\infty}^{+\infty} df \sum_{n=1}^{N} d_n \, \psi_{n,ideal}(f) H_k(f)$$

$$T_{k,ideal} = \sum_{n=1}^{N} d_n \int_{-\infty}^{+\infty} df \psi_{n,ideal}(f) H_k(f) = \chi_k \, d_k \, ,$$

wherein $\chi_k$ = const. and $k = 1,..,N$. I.e. , in the ideal case with a vanishing error component $\Delta\psi_n(f) = 0$, a perfect reconstruction by decoding said ideal transmission signal $S_{ideal}(f)$ in the above way is possible:

$$d_k = \frac{T_{k,ideal}}{\chi_k} \, .$$

Within real applications, there is usually a nonvanishing error component $\Delta\psi_n(f)$ which leads to the following term when coding/decoding according to prior art methods:

$$T_k = \int_{-\infty}^{+\infty} df \, S(f) H_k(f) = \int_{-\infty}^{+\infty} df \sum_{n=1}^{N} d_n \, \psi_n(f) H_k(f)$$

$$T_k = \int_{-\infty}^{+\infty} df \, H_k(f) \sum_{n=1}^{N} d_n \, [\psi_n^0(f) + \Delta\psi_n(f)]$$

$$T_k = \int_{-\infty}^{+\infty} df \, H_k(f) \sum_{n=1}^{N} d_n \, \psi_n^0(f) + \int_{-\infty}^{+\infty} df \, H_k(f) \sum_{n=1}^{N} d_n \, \Delta\psi_n(f)$$

$$T_k = \chi_k \, d_k + \varepsilon_k \, , \qquad\qquad\qquad \text{(equation 4)}$$

wherein

$$\varepsilon_k = \int\limits_{-\infty}^{+\infty} df\, H_k(f) \sum_{n=1}^{N} d_n\, \Delta\psi_n(f)\,. \qquad\qquad (\text{equation } 5)$$

In difference to the ideal case, wherein the decoded symbols can be obtained with the equation $d_k = \dfrac{T_{k,ideal}}{\chi_k}$, in the real case there is an unwanted term $\varepsilon_k$ according to equation 5, which is denoted as a so-called ISI-term $\varepsilon_k$ for the further description, since it symbolizes an unwanted inter-symbol interference that is occurring in the real case when using prior art coding methods.

Said ISI-term $\varepsilon_k$ is particularly disadvantageous when using modulation schemes of higher order and impairs a correct decoding of data symbols.

Accordingly, the coding method of the present invention comprises determining a correction function $\xi(f)$ which is applied to the transmission signal S(f) and which effects a predistortion of the transmission signal S(f) whereby a corrected transmission signal $S_{pd}$(f) is obtained:

$$S_{pd}(f) = S(f) - \xi(f) = \sum_{n=1}^{N} d_n\, \psi_n(f) - \xi(f)$$

Said inventive correction function $\xi(f)$ is determined in order to reduce or even eliminate said unwanted ISI-term $\varepsilon_k$ thus enabling a correct decoding of coded data symbols.

For determining the inventive correction function $\xi(f)$, the following approach is adopted:

The decoding of a corrected transmission signal $S_{pd}$(f) leads to decoded data

$$T_{k,pd} = \int\limits_{-\infty}^{+\infty} df\, S_{pd}(f)\, H_k(f) = \chi_k\, d_k\,,$$

$k = 1,..,N$, which, as in the ideal case, does not comprise an ISI-term $\varepsilon_k$.

As a consequence of using the inventive corrected transmission signal $S_{pd}$(f), it is thus obtained

$$T_{k,pd} = \int\limits_{-\infty}^{+\infty} df\, [S(f) - \xi(f)]\, H_k(f)$$

$$T_{k,pd} = \int\limits_{-\infty}^{+\infty} df\, S(f)\, H_k(f) - \int\limits_{-\infty}^{+\infty} df\, \xi(f)\, H_k(f)\,,$$

which leads to

$$T_{k,pd} = \chi_k\, d_k + \varepsilon_k - \int\limits_{-\infty}^{+\infty} df\, \xi(f)\, H_k(f) = \chi_k\, d_k$$

by using equation 4 which is described above.

Consequently, for the ISI-term $\varepsilon_k$ it is found that:

$$\varepsilon_k = \int\limits_{-\infty}^{+\infty} df\, \xi(f) H_k(f)\,, \qquad\qquad \text{(equation 6)}$$

if $T_{k,pd} = \chi_k d_k$ as demanded for a decoding without an influence of the ISI-term $\varepsilon_k$.

When comparing equation 5 with equation 6,

$$\int\limits_{-\infty}^{+\infty} df\, H_k(f) \sum_{n=1}^{N} d_n\, \Delta\psi_n(f) \;=\; \int\limits_{-\infty}^{+\infty} df\, \xi(f) H_k(f)\,,$$

it can be seen that

$$\xi(f) \overset{!}{=} \sum_{n=1}^{N} d_n\, \Delta\psi_n(f)\,,$$

i.e. said inventive correction function $\xi(f)$ depends on the data symbols $d_n$ and the error component $\Delta\psi_n(f)$.

For calculating the inventive correction function $\xi(f)$, equations 4 and 6 are used:

$$\int\limits_{-\infty}^{+\infty} df\, \xi(f) H_k(f) = T_k - \chi_k\, d_k\,,$$

wherein by means of discrete integration the equation

$$\int\limits_{l=1}^{L} \Delta f\; H_k(f_l)\, \xi(f_l) \;=\; T_k \;-\; \chi_k\, d_k\,,\; (k\;=\;1,2,\ldots,N)$$

$$\text{(equation 7)}$$

is obtained which leads to the equation system:

$$H_k(f_1)\xi(f_1) + H_k(f_2)\xi(f_2) + \ldots + H_k(f_L)\xi(f_L) = \gamma_k,\;\; k = 1,2,\ldots,N$$

$$\text{(equation 8)}$$

with

$$\gamma_k = \frac{1}{\Delta f}(T_k - \chi_k\, d_k)\,, \qquad (\,k=1,2,\ldots,L\,)\,.$$

The discrete integration used to obtain equation 7 generally enables to replace the integral term $\int\limits_{-\infty}^{+\infty} df\, u(f)$

comprising a function u(f) by the term $\int\limits_{l=1}^{L} \Delta f\, u(f) = \Delta f \cdot \sum\limits_{l=1}^{L} u(f_l)$, as long as u(f) is nonzero only within a certain

range $-f_g \le f \le +f_g$ and u(f) is only defined for discrete values of the variable f, wherein $\Delta f = f_{l+1} - f_l = const.$ for l=1, .., L-1, which in the present example holds true for $H_k(f)\xi(f)$.

Since there are L many unknowns $\xi(f_1),...,\xi(f_L)$ within equation system 8, L equations are required for solving the equation system. However, as can be seen from equation 7, there are only N many unknowns to be dealt with because of k=1, .., N; thus it is sufficient to consider only N many unknowns, e.g. the N first unknowns $\xi(f_1), ..., \xi(f_N)$, of equation system 8. The remaining unknowns $\xi(f_{N+1}), ..., \xi(f_L)$ can be set to zero. Accordingly, a simplified equation system is obtained:

$$H_k(f_1)\,\xi(f_1) + H_k(f_2)\,\xi(f_2) + \ldots + H_k(f_{N-1})\,\xi(f_{N-1}) + H_k(f_N)\,\xi(f_N) = \gamma_k$$

After solving the above equation system, the values $\xi(f_1),...,\xi(f_N)$ of the correction function $\xi(f)$ are known and can be used to correct the transmission signal S(f) according to:

$$S_{pd}(f) = S(f) - \xi(f) = \sum_{n=1}^{N} d_n\,\psi_n(f) - \xi(f)\,.$$

Consequently, by using the corrected transmission signal, the ISI-term $\varepsilon_k$ can be minimized, cf. equation 6.
A further embodiment of the present invention is characterized by a coding signal

$$\Psi_n(f) = H_n(f) \cdot e^{-f^2} + \Delta\Psi_n(f)\,,$$

i.e. $\psi_n^0(f) = H_n(f)\, e^{-f^2}$, wherein $H_n(f)$ is the Hermite polynomial of n-th order.

The present embodiment is further characterized by said transmission Signal S(f) comprising two sub-signals I(f) and Q(f), which may e.g. represent an in-phase component I(f) of the transmission signal S(f) and a quadrature component Q(f), respectively:

$$S(f) = I(f) + i\,Q(f), \qquad\qquad\qquad \text{(equation 10)}$$

wherein said sub-signals I(f) and Q(f) are defined within a frequency range $\mathbf{f} = \mu[- f_g, - f_g + \Delta f, - f_g + 2\Delta f, - f_g + 3\Delta f,..., 0,\Delta f,...,+ f_g]$, $f_g = 2.5MHz$, wherein $\mu$ constitutes a parameter that may be re-calculated.
Said frequency range $\mathbf{f}$ may also be denoted as $\mathbf{f} = \{f_1, f_2, ...,f_L\}$, wherein L may e.g. be 16 or 32.
The sub-signal I(f) is determined by data symbols and Hermite polynomials having an odd index:

$$I(f) = \sum_{n=1}^{N_0^{odd}} d_{2n-1}\ \Psi_{2n-1}(f),$$

whereas the sub-signal Q(f) is determined by data symbols and Hermite polynomials having an even index:

$$Q(f) = \sum_{n=1}^{N_0^{even}} d_{2n}\ \Psi_{2n}(f),$$

wherein

$$\Psi_n(f) = H_n(f)\, e^{-f^2} + \Delta\Psi_n(f)$$

$$N_0^{odd} = (N_{odd} + 1)/2$$

$$N_0^{even} = N_{even}/2,$$

$$N_{odd} = \begin{cases} N-1 & if\ \ N\ \ is\ \ even \\ N & if\ \ N\ \ is\ \ odd \end{cases}$$

$$N_{even} = \begin{cases} N & if\ \ N\ \ is\ \ even \\ N-1 & if\ \ N\ \ is\ \ odd \end{cases}$$

In order to decode the data symbols $d_n$, $n = 1, 3,....,N_{odd}$ and $d_n$, $n = 2, 4,..., N_{even}$, respectively, the following equations must be considered for I(f) and Q(f), respectively:

$$T_k^I = \int_{-\infty}^{+\infty} df\, H_k(f)\, I(f) = \int_{-\infty}^{+\infty} df\, H_k(f) \sum_{n=1}^{N_0^{odd}} d_{2n-1}\ \Psi_{2n-1}(f)$$

$$T_k^Q = \int_{-\infty}^{+\infty} df\, H_k(f)\, Q(f) = \int_{-\infty}^{+\infty} df\, H_k(f) \sum_{n=1}^{N_0^{even}} d_{2n}\ \Psi_{2n}(f)$$

Thus, for the correction functions $\xi_I(f)$, $\xi_Q(f)$ is found:

$$\xi_I(f) = \sum_{n=1}^{N_0^{odd}} d_{2n-1} \, \Delta\Psi_{2n-1}(f)$$

$$\xi_Q(f) = \sum_{n=1}^{N_0^{even}} d_{2n} \, \Delta\Psi_{2n}(f) \, ,$$

and consequently, after solving the respective equation system for $\xi_I(f_1), ...,\xi_I(f_N)$ and $\xi_Q(f_1),...,\xi_Q(f_N)$, which can be accomplished in analogy to solving equation system 8 as described above, corrected sub-signals I(f) and Q(f) and thus the corrected transmission signal $S_{pd}(f)$ can be obtained:

$$S_{pd}(f) = S(f) - \xi(f) = I(f) + iQ(f) - \xi_I(f) - i\xi_Q(f)$$

Fig. la depicts results corresponding to the inventive coding method applied to the sub-signal I(f) as used in the aforedescribed embodiment of the present invention in comparison with results achieved by prior art. The results are given in form of a table which contains in its first column an index number i ranging from 1 to 10 and denoting one of ten specific data symbols $d_1$ to $d_{10}$, which are presented in the second column denoted "di" of said table.

The third column of the table shown in Fig. la correspondingly comprises data symbols as can be obtained by decoding the previously coded data symbols $d_1$ to $d_{10}$, wherein the coding has been performed according to prior art methods, i.e. without using the inventive correction function $\xi_I(f)$ for predistorting the sub-signal I(f). A comparison of the data symbol values comprised within column 2 and column 3 shows a substantial deviation of the data symbol values of said columns, which is mainly due to an influence of the ISI-term that is not suppressed for obtaining the data symbol values of column 3.

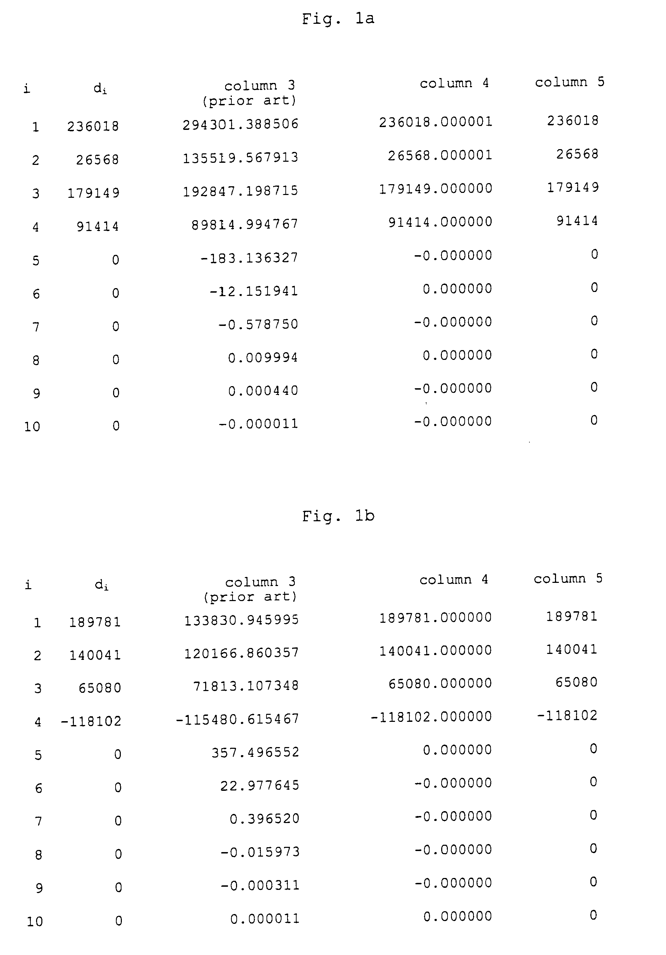

Even for data symbol values of zero, i.e. for $d_5$ to $d_{10}$ according to column 2 of Fig. 1a, when using prior art methods, corresponding symbol values of decoded symbols are obtained ranging from 0.009994 to -183.136327 which leads to decoding errors.

When coding the data symbols of column 2 according to the inventive method, i.e. by applying the inventive correction function $\xi_I(f)$, the decoding yields data symbol values as given in column 4 of Fig. 1a, which do not show a substantial deviation from the original data symbol values of column 2.

Column 5 shows the data symbol values of column 4 rounded to zero decimals, which are equal to the respective values of column 2. Notably, even for the data symbols $d_5$ to $d_{10}$, having a value of zero, the corresponding values of column 4 or 5 show no deviation, which is due to the inventive suppression of inter-symbol interference by using the correction function $\xi_I(f)$.

Similar to Fig. 1a, Fig. 1b depicts the respective data symbols for coding / after decoding used in conjunction with the sub-signal Q(f).

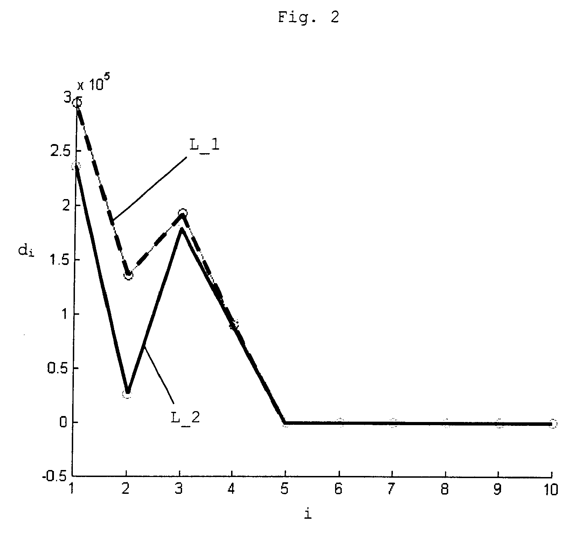

A graphical representation of the results according to the table of Fig. 1a is given by Fig. 2, in which the dashed line L_1 denotes the data symbol values of column 3, i.e. after decoding when using a prior art coding method without inventive correction function $\xi_I(f)$. Line L_2 denotes the data symbol values of column 2, i.e. the values of the data symbols to be coded, and at the same time the data symbol values of column 4, i.e. after decoding when using the inventive coding method comprising an application of the inventive correction function $\xi_I(f)$.

The present invention is not limited to using Hermite polynomials. Instead of using Hermite polynomials, according to a further advantageous embodiment of the present invention any other set of orthogonal functions may also be employed to define the coding signal, or its orthogonal component, respectively. In this case, of course, a corresponding orthogonality condition must be used that fits to the respective coding signal.

According to another embodiment of the present invention, it is also possible to define an in-phase component I(f) of the transmission signal S(f) and a quadrature component Q(f) according to

$$I(f) = \sum_{n=1}^{N} d_n^I \, \Psi_n(f) \, ,$$

$$Q(f) = \sum_{n=1}^{N} d_n^Q \, \Psi_n(f) \, ,$$

wherein 2*N many data symbols $d_n^I$ , n=1, .., N, $d_n^Q$ , n=1, .., N may be coded which leads to the transmission signal

$$S(f) = I(f) + i\,Q(f).$$

Coding said 2*N many data symbols in the above described manner, i.e. particularly by using the same coding signal $\psi_n(f)$ for each sub-signal I(f), Q(f) can be performed since said in-phase component I(f) and said quadrature component Q(f) do not influence each other when forming said transmission signal S(f), because I(f) constitutes the real part of the transmission signal S(f) and Q(f) constitutes the imaginary part of the transmission signal S(f), and said real part and said imaginary part may be considered separately as far as coding by using the inventive method is concerned.

**Claims**

1. Method of coding data, wherein a coding signal ($\psi_n(f)$, n=1, .., N) is used for coding data symbols ($d_1$, $d_2$, .., $d_N$), said coding signal ($\psi_n(f)$) comprising an orthogonal component ( $\psi_n^0(f)$ ) and an error component ($\Delta\psi_n(f)$), wherein a transmission signal (S(f)) depending on said data symbols ($d_1$, $d_2$, .., $d_N$) and said coding signal ($\psi_n(f)$) is obtained by said coding, wherein the transmission signal (S(f)) is preferably obtained according to the equation

$$S(f) = \sum_{n=1}^{N} d_n \psi_n(f) \, ,$$ wherein N is the number of data symbols ($d_1$, $d_2$, .., $d_N$) to be coded, **characterized by** determining a correction function ($\xi(f)$) and by applying said correction function ($\xi(f)$) to said transmission signal (S(f)) in order to obtain a corrected transmission signal ($S_{pd}(f)$).

2. Method according to claim 1, wherein said applying is preferably performed by adding and/or subtracting said correction function ($\xi(f)$) to/from said transmission signal (S(f)).

3. Method according to one of the claims 1 to 2, **characterized by** determining said correction function ($\xi(f)$) depending on the coding signal ($\psi_n(f)$), in particular depending on the error component ($\Delta\psi_n(f)$) of the coding signal ($\psi_n(f)$).

4. Method according to one of the preceding claims, **characterized in that** said correction function ($\xi(f)$) is determined depending on an ISI-term ($\varepsilon_k$, k=1, .., N) corresponding to an inter-symbol interference that occurs when coding said data symbols ($d_k$, k=1, .., N).

5. Method according to one of the preceding claims, **characterized in that** said orthogonal component ( $\psi_n^0(f)$ ) of said coding signal ($\psi_n(f)$) satisfies an orthogonality condition, in particular the orthogonality condition

$$\int_{-\infty}^{+\infty} df \psi_n^0(f) H_k(f) = \chi_k \delta_{nk} \, ,$$ wherein k,n =1, .., N, wherein $H_k(f)$ is the Hermite polynomial of k-th order, $\chi_k$ is a known constant, and wherein $\delta_{nk}$ is the Kronecker symbol.

6. Method according to claim 4 or 5, wherein the ISI-term ($\varepsilon_k$) is obtained according to the equation

$$\varepsilon_k = \int_{-\infty}^{+\infty} df H_k(f) \sum_{n=1}^{N} d_n \Delta \psi_n(f) \; ,$$ wherein $H_k(f)$ is the Hermite polynomial of k-th order, $\Delta \psi_n(f)$ is said error component, and wherein $\xi(f) = \sum_{n=1}^{N} d_n \Delta \psi_n(f)$ is said correction function.

7. Transmitter comprising means for coding data symbols ($d_1$, $d_2$, .., $d_N$) in order to obtain a transmission signal ($S(f)$) depending on said data symbols ($d_1$, $d_2$, .., $d_N$) and a coding signal ($\psi_n(f)$), **characterized by** further comprising predistortion means capable of determining a correction function ($\xi(f)$) and of applying said correction function ($\xi(f)$) to said transmission signal ($S(f)$) in order to obtain a corrected transmission signal ($S_{pd}(f)$).

8. Transmitter according to claim 7, **characterized by** being capable of performing the method according to one of the claims 1 to 6.

## Fig. 1a

| i | $d_i$ | column 3 (prior art) | column 4 | column 5 |
|---|---|---|---|---|
| 1 | 236018 | 294301.388506 | 236018.000001 | 236018 |
| 2 | 26568 | 135519.567913 | 26568.000001 | 26568 |
| 3 | 179149 | 192847.198715 | 179149.000000 | 179149 |
| 4 | 91414 | 89814.994767 | 91414.000000 | 91414 |
| 5 | 0 | -183.136327 | -0.000000 | 0 |
| 6 | 0 | -12.151941 | 0.000000 | 0 |
| 7 | 0 | -0.578750 | -0.000000 | 0 |
| 8 | 0 | 0.009994 | 0.000000 | 0 |
| 9 | 0 | 0.000440 | -0.000000 | 0 |
| 10 | 0 | -0.000011 | -0.000000 | 0 |

## Fig. 1b

| i | $d_i$ | column 3 (prior art) | column 4 | column 5 |
|---|---|---|---|---|
| 1 | 189781 | 133830.945995 | 189781.000000 | 189781 |
| 2 | 140041 | 120166.860357 | 140041.000000 | 140041 |
| 3 | 65080 | 71813.107348 | 65080.000000 | 65080 |
| 4 | -118102 | -115480.615467 | -118102.000000 | -118102 |
| 5 | 0 | 357.496552 | 0.000000 | 0 |
| 6 | 0 | 22.977645 | -0.000000 | 0 |
| 7 | 0 | 0.396520 | -0.000000 | 0 |
| 8 | 0 | -0.015973 | -0.000000 | 0 |
| 9 | 0 | -0.000311 | -0.000000 | 0 |
| 10 | 0 | 0.000011 | 0.000000 | 0 |

Fig. 2

## EUROPEAN SEARCH REPORT

Application Number

EP 04 29 3042

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 411 977 B1 (BARGAUAN MICHELE) 25 June 2002 (2002-06-25) * column 2, line 18 - line 67 * * figures 1,2 * ----- | 1-8 | H04B1/69 H04L25/03 H04L27/00 |
| X | SALEH A A M ET AL: "ADAPTIVE LINEARIZATION OF POWER AMPLIFIERS IN DIGITAL RADIO SYSTEMS" BELL SYSTEM TECHNICAL JOURNAL, AMERICAN TELEPHONE AND TELEGRAPH CO. NEW YORK, US, vol. 62, no. 4, PART 1, 1 April 1983 (1983-04-01), pages 1019-1033, XP002028354 * page 1021, paragraph 3 * * figures 1,2 * * equations (2)-(4) * ----- | 1,7 | |
| A | TANIGUCHI K ET AL: "Design and analysis of template waveform for receiving uwb signals" ULTRA WIDEBAND SYSTEMS, 2004. JOINT WITH CONFERENCE ON ULTRAWIDEBAND SYSTEMS AND TECHNOLOGIES. JOINT UWBST & IWUWBS. 2004 INTERNATIONAL WORKSHOP ON KYOTO, JAPAN MAY 18-21, 2004, PISCATAWAY, NJ, USA,IEEE, 18 May 2004 (2004-05-18), pages 125-129, XP010716233 ISBN: 0-7803-8373-7 * figure 2 * * page 126, right-hand column, paragraph 2 * ----- -/-- | 1-8 | TECHNICAL FIELDS SEARCHED (Int.Cl.7) H04B H04L |

The present search report has been drawn up for all claims

| Place of search | Date of completion of the search | Examiner |
|---|---|---|
| Munich | 11 July 2005 | Stolte, N |

European Patent

Office

**EUROPEAN SEARCH REPORT**

Application Number

EP 04 29 3042

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LOW M A ET AL: "Precoded nonlinear constant-envelope modulations" SIGNALS, SYSTEMS, AND ELECTRONICS, 1998. ISSSE 98. 1998 URSI INTERNATIONAL SYMPOSIUM ON PISA, ITALY 29 SEPT.-2 OCT. 1998, NEW YORK, NY, USA,IEEE, US, 29 September 1998 (1998-09-29), pages 349-355, XP010316781 ISBN: 0-7803-4900-8 * section III *<br><br>----- | 1-8 | |
| | | | TECHNICAL FIELDS SEARCHED (Int.Cl.7) |

The present search report has been drawn up for all claims

| Place of search | Date of completion of the search | Examiner |
|---|---|---|
| Munich | 11 July 2005 | Stolte, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                     
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 29 3042

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2005

| Patent document cited in search report | Publication date | Patent family member(s) | Publication date |
|---|---|---|---|
| US 6411977 B1 | 25-06-2002 | IT 1302612 B1 | 29-09-2000 |

For more details about this annex : see Official Journal of the European Patent Office, No. 12/82

EPO FORM P0459